# EUROPÄISCHE PATENTSCHRIFT

(11) **EP 1 034 216 B1**
(45) Veröffentlichungstag und Bekanntmachung des Hinweises auf die Patenterteilung: **05.07.2006**
(21) Anmeldenummer: 98956925.6
(22) Anmeldetag: 18.11.1998
(51) Int. Cl.: C08K 9/04, C08K 9/08, C08K 9/10

(54) **MIKROVERKAPSELTES KAUTSCHUKADDITIV**
MICROENCAPSULATED RUBBER ADDITIVE
ADDITIF MICROENCAPSULE POUR CAOUTCHOUC

(30) Priorität: 25.11.1997 DE 19754341
(43) Veröffentlichungstag der Anmeldung: 13.09.2000
(60) Teilanmeldung: 06004755.2
(73) Patentinhaber: Schill + Seilacher "Struktol" Aktiengesellschaft, 22113 Hamburg (DE)
(72) Erfinder: MENTING, Karl-Hans, D-21244 Buchholz (DE); STONE, Christopher, D-22393 Hamburg (DE)
(74) Vertreter: UEXKÜLL & STOLBERG
(86) Internationale Anmeldenummer: PCT/EP1998/007362
(87) Internationale Veröffentlichungsnummer: WO 1999/027012

(56) Entgegenhaltungen:
- DE-A- 4 013 005
- FR-A- 2 603 273
- US-A- 2 623 079
- DATABASE WPI Section Ch, Week 8630 Derwent Publications Ltd., London, GB; Class A60, AN 86-194679 XP002092126 & JP 61 129039 A (YOKOHAMA RUBBER CO LTD) , 17. Juni 1986
- DATABASE WPI Section Ch, Week 7729 Derwent Publications Ltd., London, GB; Class A12, AN 77-51363Y XP002092127 & JP 52 069454 A (BRIDGESTONE TIRE KK) , 9. Juni 1977
- WPI und PAJ-Zusammenfassungen von JP-A-61098751

## Beschreibung

Die Erfindung betrifft eine mindestens ein mikroverkapseltes Kautschukadditiv enthaltende Zusammensetzung, ein Verfahren zu ihrer Herstellung, ihre Verwendung bei der Herstellung von Kautschuk und Kautschukmischungen und damit erzeugte Kautschukmischungen und -produkte.

Kautschukadditive sind beispielsweise Vulkanisationschemikalien wie Vulkanisationsmittel, Vulkanisationsbeschleuniger und Verzögerer sowie Beschleunigeraktivatoren.

Bei der Herstellung der meisten Kautschukmischungen werden beispielsweise in Bezug auf das Additiv Schwefel organische Verbindungen, die Schwefel in thermisch labiler Form enthalten, oder elementarer Schwefel verwendet, um die Polymermoleküle während einer Hochtemperaturvulkanisationsstufe (normalerweise etwa 150 bis 190 °C) zu vernetzen. Der Schwefel wird in die Kautschukmischung während eines Mischprozesses eingemischt, bei dem die Temperatur normalerweise 110 °C nicht überschreitet.

Schwefel existiert in verschiedenen allotropen Formen. Die in der Kautschukindustrie am häufigsten verwendeten Schwefelmodifikationen sind kristallin (rhombischer oder monokliner Schwefel) und schmelzen bei 124 bzw. 129 °C. Der kristalline Schwefel ist preisgünstig. Er ist bei Mischtemperaturen von ca. 100 °C vollständig im Kautschuk löslich, zeigt aber nur begrenzte Löslichkeit bei Raumtemperatur. Die Löslichkeit bei Raumtemperatur hängt von dem Kautschukpolymertyp und zu einem gewissen Teil von den weiteren vorhandenen Mischungsbestandteilen ab, liegt aber im allgemeinen in der Größenordnung von 1 Gew.-%, bezogen auf das Polymer.

Schwefel wird, bezogen auf das Kautschukpolymer, normalerweise in Konzentrationen von etwa 0,4 bis 5 Gew.-%, bevorzugter von 1,0 bis 4 Gew.-% und häufig im Bereich von 1,5 bis 3 Gew.-%, zu Kautschukmischungen gegeben. Ein in der Reifenindustrie sehr wichtiger Kautschukmischungstyp ist der, der für die Beschichtung von stahlcordverstärkten Reifen verwendet wird. Diese Mischung enthält im allgemeinen 4 bis 5 Gew.-% Schwefel.

Aufgrund der oben beschriebenen begrenzten Löslichkeit von Schwefel wird jeglicher Schwefel, der im Überschuß zu der bei Raumtemperatur löslichen Menge in der ca. 100 bis 110 °C heißen Kautschukmischung gelöst war, aus der Mischung ausgeschieden, wenn diese nach dem Vermischen oder nach Verarbeitungsschritten wie Extrudieren oder Kalandrieren abkühlt. Wenn dieser Wechsel stattfindet, fällt der im Kautschuk unlöslich gewordene Schwefel aus und blüht an der Oberfläche des Kautschuks aus, d.h. er migriert an die Kautschukoberfläche. Dort bildet sich dann eine kristalline Schicht, die die natürliche Klebrigkeit und Haftfähigkeit des Kautschuks zerstört, wodurch es praktisch unmöglich wird, derartigen Kautschuk an anderen Kautschukkomponenten eines komplexen Artikels, wie beispielsweise ein Reifen, zum Haften zu bringen.

Es ist Stand der Technik dieses Problem durch die Verwendung anderer allotroper Schwefelformen, nämlich von amorphem, unlöslichem Schwefel, zu lösen. Dieser Schwefeltyp ist bei allen Temperaturen unterhalb etwa 105°C in Kautschuk vollständig unlöslich und verhält sich somit wie ein inerter Füllstoff. Die Schwefelpartikel, die in der Kautschukmischung während des Vermischens dispergiert werden, verbleiben dort wo sie sind, wenn die Temperatur der Mischung nach dem Vermischen oder Verarbeiten absinkt, so daß die Oberflächenklebrigkeit/-haftfähigkeit der Mischung nicht nachteilig beeinflußt wird.

Amorpher, unlöslicher Schwefel weist jedoch eine Reihe gewichtiger Nachteile auf. So ist er sehr teuer, und es ist sehr schwierig, ihn gleichförmig in der Kautschukmischung zu dispergieren. Er ist zudem bei Lagerung als solcher oder in der Kautschukmischung instabil und kann sich leicht in die lösliche kristalline Form umwandeln.

Begrenzte Lagerfähigkeit ist ein Problem, das man auch von anderen bei der Vulkanisation verwendeten Kautschukadditiven kennt. Beispielsweise sind Vulkanisationschemikalien wie Schwefelsilane sehr empfindlich gegenüber Feuchtigkeit. Das gleiche gilt für Vulkanisationsbeschleuniger wie Benzothiazyl-2-cyclohexylsulfenamid (CBS), das maximal einige Monate gelagert werden kann.

Bei dem Versuch die genannten Nachteile zu überwinden, wird amorpher, unlöslicher Schwefel häufig in Form einer Mischung mit Ölen oder anderen Dispergierhilfsmitteln verwendet, wobei jedoch der Gehalt an unlöslichem Schwefel so niedrig wie 60 Gew.-% sein kann. Dies verteuert die Verwendung des amorphen, unlöslichen Schwefels weiter.

Die Instabilität von amorphem, unlöslichem Schwefel nimmt bei hohen Temperaturen und bei Anwesenheit von Aminen oder Verbindungen mit Amingruppen zu. So induzieren Temperaturen über 100 °C den Start der Umwandlung in kristallinen Schwefel. Eine weitere Temperatursteigerung beschleunigt die Umwandlung. Die Kautschukmischungsherstellung und -verarbeitung müssen daher genau kontrolliert werden, um diese Umwandlung zu minimieren.

Die meisten organischen Beschleuniger, die in Kautschukmischungen verwendet werden, weisen Aminogruppen auf, die die Umwandlung von amorphem, unlöslichem in kristallinen, löslichen Schwefel schon bei Raumtemperatur katalysieren. Viele in Kautschukmischungen verwendete Alterungs-/Abbauschutzmittel haben Aminogruppen oder sind Amine, die ebenfalls die Umwandlung von amorphem, unlöslichem Schwefel katalysieren. Diese Umwandlung kann selbst im Rohmateriallager stattfinden, falls amorpher, unlöslicher Schwefel in der Nähe solcher Chemikalien gelagert wird. Sie kann aber auch in der Mischung stattfinden.

Entsprechende Probleme hinsichtlich der Stabilität und des Verhaltens in Kautschuken, auch gegenüber Co-Additiven, und bei der Verarbeitung bestehen auch bei vielen anderen Kautschukadditiven wie z.B. Vulkanisationsbeschleunigern und Verzögerern sowie Beschleunigeraktivatoren.

Aus der JP-52069454 und dem entsprechenden Derwent Abstract ist eine vulkanisierbare Kautschuktzusammensezung bekannt, die 1 bis 7 Gewichtsteile Vulkanizationsmittel und 100 Gewichtsteile natürlichen oder synthetischen Kautschuk umfaßt. Das Vulkanisationsmittel umfaßt mindestens zu 80 Gew.% unlöslichen Schwefel mit einem durchschnittlichen Molekulargewicht von 100000 bis 300000 der in einem Polyvinylalkoholharz mikroverkapselt ist.

Ferner ist aus der JP-A-61098751 und dem entsprechenden Derwent Abstract ein Vulkanisationsmittel bekannt, das Mikrokapseln von mit einem Epoxyharz umhüllten Schwefel umfaßt, die einen Teilchendurchmesser von 50 bis 200 µm aufweisen.

Weiterhin ist aus der US-A-2 623 079 ein Verfahren zur mechanischen Verarbeitung von Kautschuk mit Schwefel bekannt, bei dem Schwefel in Form diskreter Teilchen, die einzeln mit einem filmbildenden Harz beschichtet sind, wobei das Harzmaterial den Schwefel bei der mechanischen Bearbeitung schützt, aber später eine Reaktion des Schwefels mit dem Kautschuk unter Vulkanisationsbedingungen erlaubt.

Der vorliegenden Erfindung liegt somit die Aufgabe zugrunde, Kautschukadditive in Form einer Zusammensetzung zur Verfügung zu stellen, die zur Verwendung in Kautschuk oder Kautschukmischungen geeignet ist. Die Additive, insbesondere Vulkanisationschemikalien, sollen leicht in den Kautschuk einarbeitbar und mit dem Kautschukmaterial gut verträglich sein, eine hohe Wirksamkeit im Kautschuk oder in der Kautschukmischung zeigen und sich durch gute Verteilbarkeit in dem Kautschukmaterial auszeichnen. Die Zusammensetzungen sollen sich ferner durch Stabilität bei Lagerung in der Nähe von basischen Substanzen oder im Kautschuk bzw. Stabilität bei der Kautschukverarbeitung bei Temperaturen unterhalb etwa 130 °C auszeichnen.

Aufgabe der Erfindung ist es ferner, ein Verfahren zur Herstellung dieser Kautschukadditivzusammensetzung bereitzustellen.

Schließlich ist es Aufgabe der vorliegenden Erfindung, unter Verwendung der Additivzusammensetzung erhaltene Kautschukmischungen und -produkte bereitzustellen.

Gelöst wird diese Aufgabe durch eine Kautschukadditivzusammensetzung, die mindestens ein Kautschukadditiv (a) enthält, wobei das mindestens eine Additiv (a) mit Beschichtungsmaterial (b) unter Bildung von Mikrokapseln umhüllt ist, dadurch gekennzeichnet, daß das Beschichtungsmaterial (b) in Kautschuk oder in Kautschukmischungen bis zu Temperaturen von 120 bis 140 °C unlöslich ist und ausgewählt ist aus der Gruppe bestehend aus Wachsen, Paraffinen, Polyethylen, Ethylen-Vinylacetat-Copolymeren, Polyvinylalkoholen und Mischungen derselben und die Mikrokapseln eine Größe von 1 bis 75 µm aufweisen, wobei die Mikrokapseln mittels einer niedrigschmelzenden, wachsartigen Substanz unter Bildung von 0,1 bis 10 mm großen Perlen zusammengehalten werden.

Bevorzugte Ausführungsformen der Erfindung sind Gegenstand der Unteransprüche.

Die Kautschukadditive, die erfindungsgemäß in Form von Mikrokapseln bei der Kautschukherstellung verwendet werden können, umfassen insbesondere Vulkanisationschemikalien wie Vulkanisationsmittel, Vulkanisationsbeschleuniger und Beschleunigeraktivatoren.

Geeignete Vulkanisationsmittel umfassen Schwefel in seinen verschiedenen allotropen Formen, Schwefelspender wie Dimorpholyldisulfid (DTDM), 2-Morpholinodithiobenzothiazol (MBSS), Tetramethylthiuramdisulfid (TMTD), Caprolactamdisulfid, Dipentamethylenthiuramdisulfid und Peroxide.

Geeignete Vulkanisationsbeschleuniger umfassen Xanthogenate, Dithiocarbamate, Tetramethylthiuramdisulfid und andere Thiurame, Thiazole, Sulfenamide, insbesondere Benzothiazyl-2-cyclohexylsulfenamid (CBS), Benzothiazyl-2-tert.-butylsulfenamid (TBBS), Guanidine, Thioharnstoff-Derivate und Amin-Derivate.

Weitere geeignete Vulkanisationsbeschleuniger sind 2-Mercapto-benzothiazol (MBT), Zinksalz des 2-Mercaptobenzothiazols (ZMBT), Benzothiazyl-2-sulfenmorpholid (MBS), Benzothiazyldicyclohexylsulfenamid (DCBS), Diphenylguanidin (DPG), Diorthotolylguanidin (DOTG), o-Tolylbiguanid (OTBG), Tetramethylthiurammonosulfid (TMTM), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyl-dithiocarbamat (ZEBC), Zink-N-pentamethylendithiocarbamat (ZPMC), Ethylenthioharnstoff (ETU), Diethylthioharnstoff (DETU), Diphenylthioharnstoff (DPTU).

Die Beschleuniger werden meistens in Kombination mit Aktivatoren wie Zinkoxid, Antimonsulfid und Bleiglätte und Fettsäuren wie Stearinsäure eingesetzt.

Weitere Vulkanisationschemikalien, auf die die vorliegende Erfindung angewendet werden kann, sind Schwefelsilane wie Bis(triethoxysilyl-propyl-)tetrasulfan (Si 69, Handelsproduktbezeichnung der Firma Degussa).

Ein besonders bevorzugtes Additiv ist kristalliner Schwefel, wobei die Erfindung aber auch auf amorphen Schwefel anwendbar ist.

Die erfindungsgemäßen Beschichtungsmaterialien zeichnen sich durch gute Verträglichkeit mit den Bestandteilen der Kautschukmischungen aus. Als Beschichtungsmaterial werden Wachse, Paraffine, Polyethylen (PE), Ethylen-Vinylacetat-Copolymere, Polyvinylalkohole (PVA) und Mischungen derselben verwendet, wobei Polyvinylalkohole wie Mowiol® 8-88 (Handelsprodukt der Firma Clariant, D-65926 Frankfurt), ein PVA auf Basis von Polyvinylacetat mit einem Restacetylgehalt, und Polyethylenwachse wie Vestowax® A 616 (Handelsprodukt der Firm Hüls AG, Marl) besonders geeignet sind.

Den Beschichtungsmaterialien ist gemeinsam, daß sie im allgemeinen in dem Temperaturbereich schmelzen, der für die Kautschukvulkanisation von Bedeutung ist, d.h. zwischen etwa 100 und 260 °C. Bevorzugt schmelzen sie unterhalb von 150 °C und weisen vorzugsweise einen Schmelzpunkt im Bereich von 120 bis 140 °C, insbesondere von etwa 130 °C auf. Die Beschichtungsmaterialien sind dabei vor dem Schmelzen, vorzugsweise bis zu Temperaturen von 120 bis 140 °C, insbesondere bis etwa 130 °C, in Kautschuk oder in Kautschukmischungen unlöslich. Erst bei Temperaturen oberhalb der Schmelztemperatur, z.B. von 120 bis 140 °C, insbesondere etwa 130 °C, werden die Beschichtungsmaterialien in Kautschuk löslich.

Bedingt durch dieses Schmelz- bzw. Löslichkeitsverhalten der erfindungsgemäßen Beschichtungsmaterialien, die die erfindungsgemäßen Kautschukadditive in Form von Mikrokapseln umhüllen, ähnelt das Verhalten der Kautschukadditivzusammensetzung im Kautschuk bzw. in Kautschukmischungen dem der Beschichtungsmaterialien selbst. Bezogen auf beispielsweise kristallinen, löslichen Schwefel als Additiv hat dies den Vorteil, daß kein Ausblühen/Ausschwefeln bei Temperaturen bis etwa 130 °C auftritt. Die durch das Beschichtungsmaterial gebildete Hülle der Mikrokapsel wirkt bei allen Temperaturen von Raumtemperatur bis 130 °C als physikalische Barriere und vermittelt der Kautschukmischung so bei Lagerung und allen Verarbeitungsschritten unterhalb dieser Temperatur Stabilität. Somit bleibt unter anderem die Oberflächenklebrigkeit/-haftfähigkeit erhalten.

Auch die Haltbarkeit der Additive selbst wird erhöht, wenn sie in Form der erfindungsgemäßen Zusammensetzung in mikroverkapselter Form gelagert werden. So wird beispielsweise die Anfälligkeit von amorphem, unlöslichem Schwefel gegen Umwandlung in kristallinen Schwefel oder die Empfindlichkeit von CBS gegen Feuchtigkeit bei Lagerung in mikroverkapselter Form unterdrückt bzw. deutlich verringert.

Zusätzlich ermöglicht das Beschichtungsmaterial eine schnellere und bessere Dispersion der Partikel und führt so zu einer gleichmäßigeren Verteilung in der Mischung. Da sich die Partikel wie die entsprechenden Beschichtungsmaterialien verhalten, werden auch nachteilige Staubentwicklungen, wie sie zum Beispiel von Schwefel bekannt sind, vermieden. Dies führt ferner zu dem vorteilhaften Effekt, daß das Risiko von Staubexplosionen, die ein großes Problem bei der Schwefelverarbeitung darstellen, deutlich gesenkt wird bzw. nicht mehr auftritt.

Die Mikrokapseln der erfindungsgemäßen Kautschukadditivzusammensetzung weisen im Mittel (Gewichtsmittel) eine Größe von 1 bis 75 µm, vorzugsweise 3 bis 30 µm und insbesondere 5 bis 8 µm auf.

Die Mikrokapseln können das mindestens eine Additiv in flüssiger und/oder fester Form enthalten.

Die Mikrokapseln weisen insbesondere folgende Zusammensetzung auf:
a) 99 bis 40 Gew.-%, bevorzugter 80 bis 50 Gew.-% und am meisten bevorzugt etwa 70 bis 60 Gew.-% Additiv und
b) 1 bis 60 Gew.-%, bevorzugter 20 bis 50 Gew.-% und am meisten bevorzugt etwa 30 bis 40 Gew.-% Beschichtungsmaterial.

Die erfindungsgemäßen Mikrokapseln können auf verschiedene Art und Weise hergestellt werden. Wesentlich bei dem Verfahren ist, daß vollständig umhülltes Additiv in Form von Mikrokapseln der oben beschriebenen Art und Größe erhalten wird.

Bevorzugt werdem die erfindungsgemäßen Kautschukadditivzusammensetzungen hergestellt, indem ein Gemisch, das mindestens ein Additiv, geschmolzenes Beschichtungsmaterial und gegebenenfalls weitere Hilfsstoffe wie Tenside oder Dispergiermittel enthält, in einem Kühlturm auf eine schnell rotierende Vorrichtung wie einen Drehteller fließen gelassen wird und durch die hohe Fliehkraft nach außen wandert. Durch den größeren Durchmesser am Rand werden die Teilchen getrennt und die Bildung von Agglomeraten vermieden. Nach dem Abschleudern vom Rand der rotierenden Vorrichtung fliegen die Teilchen nach außen einzeln weg und kühlen sich dabei ab, wodurch die Beschichtung erstarrt. Ein solches Verfahren läßt sich kontinuierlich betreiben und ist daher sehr effizient.

Neben diesem Verfahren kommen aber erfindungsgemäß auch andere Verfahren in Betracht, bei denen ein Gemisch, das mindestens ein Additiv und Beschichtungsmaterial in flüssiger, gelöster, suspendierter oder emulgierter Form enthält, zu Mikrokapseln einer Zusammensetzung und Größe wie oben beschrieben verabeitet wird.

Somit kommen zur Herstellung der erfindungsgemäßen Mikrokapseln auch Verfahren wie Sprühtrocknung, Wirbelbettbeschichtung, Emulsions- bzw. Suspensionsverfahren und Ausfällung in Betracht. Beispielsweise können sich Mikrokapseln auch durch Abkühlen und Absetzen lassen eines Gemisches, das mindestens ein Additiv und Beschichtungsmaterial enthält, in einem geeigneten Lösungsmittel bilden.

Beispielsweise kann Schwefel als Additiv bei erhöhten Temperaturen und Drücken, zum Beispiel bei etwa 130 °C und etwa 2,6 kPa (bar) in einem geeigneten Reaktor emulgiert werden und unter Zusatz von anionischen, kationischen oder nicht-ionischen Tensiden mit geschmolzenem oder fein emulgierten Beschichtungsmaterial umhüllt werden. Als anionische Tenside kommen beispielsweise Benzolsulfonate in Frage, insbesondere n-C₁₀- bis C₁₃₋Alkylbenzolsulfonate in Form ihrer Natrium-, Calcium- oder Tetraethylammoniumsalze. Erfindungsgemäß geeignete weitere sind beispielsweise Naphtalin- oder Phenolsulfonsäure-Kondensationsprodukte. Diese sind als Handelsprodukte Tamol® N Marken bzw. Tamol® PP von der Firma BASF AG erhältlich. Als besonders geeignet hat sich Tamol® NN 9104 erwiesen.

Das Beschichtungsmaterial kann zusammen mit dem Additiv in den Reaktor eingebracht werden. Es kann aber auch erst kurz vor Austrag zugemischt werden. Die Umhüllung kann sowohl in dem Reaktor erfolgen, indem die Lösungsmittel abgezogen werden, wobei die erfindungsgemäße Zusammensetzung ausfällt, oder durch Sprühtrocknung des Gemisches. Falls die endgültige Beschichtung erst beim Sprühtrocknen erfolgt, kann das Beschichtungsmaterial auch erst in diesem Verfahrensschritt nach Austrag aus dem Reaktor zugesetzt werden.

Es ist somit bei dem erfindungsgemäßen Verfahren auch möglich, mehrschichtige Kapselhüllen zu erzeugen, indem die Beschichtungsschritte mehrmals hintereinander durchgeführt oder auch verschiedene bevorzugte Verfahren miteinander kombiniert werden.

Die Mikrokapseln werden nach ihrer Herstellung mittels einer niedrigschmelzenden, wachsartigen Substanz unter Bildung von 0,1 bis 10 mm großen Perlen zusammengehalten. Diese Perlen geben die Mikrokapseln beim Einarbeiten in Kautschukmischungen in ihrer urprünglichen Form wieder frei.

Die so hergestellten erfindungsgemäßen Kautschukadditivzusammensetzungen können vorteilhaft bei der Herstellung von Kautschuk oder Kautschukmischungen, insbesondere solchen für die Gummiherstellung verwendet werden.

Das vorteilhafte Verhalten des Beschichtungsmaterials im Kautschuk führt wie oben beschrieben zu einer schnelleren und besseren Dispersion des Additivs und so zu einer gleichmäßigeren Verteilung in der Kautschukmischung.

Die physikalische Barriere aus Beschichtungsmaterial stellt ferner sicher, daß beispielsweise unterhalb von etwa 130 °C ein Ausschwefeln vermieden wird, wenn Schwefel als mikroverkapseltes Additiv verwendet wird. Neben diesem nachteiligen Verhalten werden aber auch weitere chemische Reaktionen von Schwefel oder anderen Additiven, die der Inhalt der erfindungsgemäßen Mikrokapseln sind, mit beliebigen anderen Bestandteilen der Kautschukmischung vermieden.

Insbesondere kann so das Problem der Anvulkanisation, die bei Temperaturen um etwa 110 °C durch Reaktion von Schwefel als Vulkanisationsmittel und organischem Vulkanisationsbeschleuniger gestartet wird, vermieden werden.

Somit ist es ein weiterer Vorteil der vorliegenden Erfindung, daß durch die Einbindung von Vulkanisationsmitteln in bis 130 °C im Kautschuk beständige, d.h. undurchlässige, Mikrokapseln der Einsatz von teuren Verzögerern, die der Unterdrückung der Anvulkanisation dienen, vermieden wird. Insbesondere kann sich auf diese Weise auch eine Vereinfachung bei der Steuerung des Verfahrens zur Herstellung von Gummiartikeln wie Reifen etc. ergeben. Die Freisetzung des eingekapselten Additivs erfolgt erst, wenn das Beschichtungsmaterial schmilzt und sich im Kautschuk auflöst.

Gegenstand der vorliegenden Erfindung sind auch unter Verwendung der erfindungsgemäßen Additivzusammensetzungen hergestellte Kautschuke, Kautschukmischungen oder Kautschukprodukte.

Die Erfindung ist im folgenden anhand von Ausführungsbeispielen illustriert.

### Beispiel 1

### Mikroverkapselung von 2-Mercapto-benzothiazol (MBT) im Drehtellerverfahren

Handelsübliches MBT-Pulver wurde zunächst in einer Prallmühle auf eine mittlere Teilchengröße von 5 µm vermahlen. Das erhaltene feine Pulver wurde im Gewichtsverhältnis 7 : 3 mit Polyethylenwachs mit einer Molmasse von etwa 1600 g/mol (Vestowax A 616, Handelsprodukt der Firma Hüls AG) mit einem Schmelzpunkt von etwa 125 °C zusammengeschmolzen und bei 135 °C auf einen Drehteller gegeben, der das Material in einem Kühlturm zerstäubte. Dabei wurden außer den gewünschten Mikrokapseln von etwa 5 µm Durchmesser auch feinere Partikel von Polyethylenwachs erhalten, die über einen Zyklon abgetrennt und dem Prozeß wieder zugeführt wurden.

### Beispiel 2

### Mikroverkapselung von Dibenzothiazyldisulfid (MBTS) im Suspensionsverfahren

1,0 kg handelsübliches MBTS-Pulver der Firma Flexsys, Brüssel mit einer mittleren Teilchengröße von 5,3 µm wurden unter Zugabe von 0,05 kg eines Alkylbenzolsulfonats als Tensid (Marlon A 365, anionisches Tensid der Firma Hüls AG) und 2,0 kg Wasser in einem V4A-Rührkessel mit Ankerrührwerk unter Rühren auf 70°C erwärmt und 1,0 kg einer auf 70°C erwärmten Lösung von 0,28 kg Polyethylenwachs mit einer Molmasse von etwa 1600 g/mol (Vestowax A 616, niedermolekulares Niederdruckpolyethylen der Firma Hüls AG, Schmelzpunkt 125 °C) in Cyclohexan zugesetzt. Alternativ zu Cyclohexan kann auch n-Heptan verwendet werden.

Die erhaltene Dispersion wurde unter intensivem Rühren auf 20 °C abgekühlt, wobei sich die erfindungsgemäßen Mikrokapseln um die individuellen Beschleunigerkristalle bildeten. Die Isolierung des Endprodukts erfolgte durch Sprühtrocknung in in einem herkömmlichem Wirbelschicht-Trockner, wie er zum Beispiel von der Firma Glatt AG, D-79589 Binzen angeboten wird. Es wurden 1,24 kg mikroverkapselter Beschleuniger erhalten, das entspricht einer Ausbeute von 93%. Der Beschleunigergehalt betrug 75,1 Gew.-%.

### Beispiel 3

Beschleuniger und Vulkanisationsmittel, die nicht durch Fällungsverfahren in wäßriger Suspension hergestellt werden, können vorteilhaft nach folgendem Verfahren in Mikrokapseln überführt werden.

Die durch geeignete Vermahlung, z.B. in Prallmühlen, gegebenenfalls unter Schutzgas wie Stickstoff, auf eine mittlere Korngröße von 5 µm vermahlenen Partikel wurden in einer gesättigten Lösung von PE-Wachs mit einem Schmelzpunkt von 125 °C in n-Heptan suspendiert und nach gründlichem Vermischen einer Sprühtrocknung unterzogen, wobei sich die erfindungsgemäßen Mikrokapseln bildeten. Dieses Verfahren ist für alle Beschleuniger und Vulkanisationsmittel geeignet, die sich aufgrund ihrer polaren chemischen Struktur nicht oder nur minimal in n-Heptan lösen. Ebenfalls vorteilhaft kann mit Cyclohexan gearbeitet werden.

### Beispiel 4

### Mikroverkapselung von Schwefel im Emulsionsverfahren mit Polyvinylalkohol

In einem 10 l Druckreaktor aus V4A Stahl wurden 3,00 kg handelsüblicher Mahlschwefel mit 6,55 kg Leitungswasser, 0,15 kg eines Alkylbenzolsulfonats (Marlon A 365, anionisches Tensid der Firma Hüls AG), 0,15 kg eines Naphthalinsulfonsäure-Kondensationsprodukts (Tamol® NN 9104, kautschukverträgliches Tensid bzw. Dispergierhilfsmittel der Firma BASF AG) und 0,30 kg Polyvinylalkohol (Mowiol 8-88, Handelsprodukt der Firma Clariant, D-65926 Frankfurt) vorgelegt und durch Rühren mit dem eingebauten Ankerrührwerk homogenisiert. Dabei wurde der Reaktor mit Dampf auf eine Temperatur von 128 °C aufgeheizt. Durch das eingebaute Schauglas konnte beobachtet werden, daß der Schwefel bei einem im Kessel gemessenen Dampfdruck von 2,6 bar nach etwa 30 Minuten aufgeschmolzen war. Nach weiteren 10 Minuten Rühren und Umpumpen über einen Rotor-Stator-Mischer (Dispax) wurde die entstandene Emulsion über eine beheizte Leitung in einem Wirbelschicht-Sprühtrockner zerstäubt, der im Umluftsystem mit auf 70 °C geheiztem Stickstoff betrieben wurde. Nach etwa 50 Minuten wurde der Sprühvorgang beendet. Durch das Verdampfen des Wassers sank die Temperatur in der Abluft auf 58 bis 60 °C ab. Das erhaltene Produkt war ein feines gelbbraunes Pulver. Die Ausbeute betrug 2,37 kg, das entspricht 66 %. Der Schwefelgehalt des Produkts betrug 81 Gew.-%.

### Beispiel 5

### Mikroverkapselung von Schwefel im Emulsionsverfahren mit Polyethylenwachs

In einem 10 1 Druckreaktor aus V4A Stahl wurden 3,00 kg handelsüblicher Mahlschwefel mit 6,55 kg Leitungswasser, 0,15 kg eines Alkylbenzolsulfonats (Marlon A 365, anionisches Tensid der Firma Hüls AG), 0,15 kg eines Naphthalinsulfonsäure-Kondensationsprodukts (Tamol® NN 9104, kautschukverträgliches Tensid bzw. Dispergierhilfsmittel der Firma BASF AG) und 0,30 kg eines Polyethylenwachses mit einer Molmasse von etwa 1600 g/mol (Vestowax A 616, niedermolekulares Niederdruckpolyethylen der Firma Hüls AG) mit einem Schmelzpunkt von etwa 125 °C vorgelegt und durch Rühren mit dem eingebauten Ankerrührwerk homogenisiert. Dabei wurde der Reaktor mit Dampf auf eine Temperatur von 128 °C aufgeheizt. Durch das eingebaute Schauglas konnte beobachtet werden, daß der Schwefel bei einem im Kessel gemessenen Dampfdruck von 2,6 bar nach etwa 30 Minuten aufgeschmolzen war. Nach weiteren 10 Minuten Rühren und Umpumpen über einen Rotor-Stator-Mischer (Dispax) wurde die entstandene Emulsion über eine beheizte Leitung in einem Wirbelschicht-Sprühtrockner zerstäubt, der im Umluftsystem mit auf 70 °C geheiztem Stickstoff betrieben wurde. Nach etwa 50 Minuten wurde der Sprühvorgang beendet. Durch das Verdampfen des Wassers sank die Temperatur in der Abluft auf 58 bis 60 °C ab. Das erhaltene Produkt war ein feines gelbbraunes Pulver. Die Ausbeute betrug 2,27 kg, das entspricht 63 %. Der Schwefelgehalt des Produkts betrug 82 Gew.-%.

### Beispiel 6

### Konfektionierung der mikroverkapselten Additive

Die nach irgendeinem der vorhergehenden Beispiele hergestellten Mikrokapseln wurden in einem nachgeschalteten Verfahrensschritt in einem Wirbelschichtreaktor (2,27 kg mikroverkapseltes Additiv) durch Aufsprühen von 0,227 kg einer niedrigschmelzenden, wachsartigen Substanz wie Pentaerythrit-tetra-stearat oder Mineralöl das zunächst erhaltene Pulver aus Mikrokapseln in 0,1 bis 10 mm große Perlen überführt. Diese enthielten praktisch keinen Staubanteil mehr, waren freifließend und somit automatisch verwägbar.

Bedingt durch den niedrigen Schmelzpunkt der wachsartigen Substanz, die die Perlen zusammenhält, wurden die Mikrokapseln beim nachfolgenden Einarbeiten in Kautschukmischungen in ihrer ursprünglichen Form wieder freigesetzt.

## Patentansprüche

1. Kautschukadditivzusammensetzung, die mindestens ein Kautschukadditiv (a) enthält, wobei das mindestens eine Additiv (a) mit Beschichtungsmaterial (b) unter Bildung von Mikrokapseln umhüllt ist, **dadurch gekennzeichnet, daß** das Beschichtungsmaterial (b) in Kautschuk oder in Kautschukmischungen bis zu Temperaturen von 120 bis 140 °C unlöslich ist und ausgewählt ist aus der Gruppe bestehend aus Wachsen, Paraffinen, Polyethylen, Ethylen-Vinylacetat-Copolymeren, Polyvinylalkoholen und Mischungen derselben und die Mikrokapseln eine Größe von 1 bis 75 µm aufweisen, wobei die Mikrokapseln mittels einer niedrigschmelzenden, wachsartigen Substanz unter Bildung von 0,1 bis 10 mm großen Perlen zusammengehalten werden.

2. Zusammensetzung nach Anspruch 1, **dadurch gekennzeichnet, daß** das Additiv (a) ausgewählt ist aus Vulkanisationschemikalien, insbesondere Vulkanisationsmitteln, Vulkanisationsbeschleunigern und Beschleunigeraktivatoren.

3. Zusammensetzung nach Anspruch 1 oder 2, **dadurch gekennzeichnet, daß** das Additiv (a) Schwefel, insbesondere kristalliner Schwefel ist.

4. Zusammensetzung nach einem der vorhergehenden Ansprüche, **dadurch gekennzeichnet, daß** der Vulkanisationsbeschleuniger ausgewählt ist aus der Gruppe bestehend aus Xanthogenaten, Dithiocarbamaten, Tetramethylthiuramdisulfid und anderen Thiuramen, Thiazolen, Sulfenamiden, Guanidinen, Thioharnstoff-Derivaten und Amin-Derivaten.

5. Zusammensetzung nach einem der vorhergehenden Ansprüche, **dadurch gekennzeichnet, daß** das Beschichtungsmaterial (b) in Kautschuk oder in Kautschukmischungen bis zu Temperaturen von 120 bis etwa 130 °C unlöslich ist.

6. Zusammensetzung nach einem der vorhergehenden Ansprüche, **dadurch gekennzeichnet, daß** das Beschichtungsmaterial (b) bei Temperaturen oberhalb von 120 bis 140 °C, insbesondere oberhalb von 130 °C, in Kautschuk oder in Kautschukmischungen löslich ist oder schmilzt.

7. Zusammensetzung nach einem der vorhergehenden Ansprüche, **dadurch gekennzeichnet, daß** die Mikrokapseln eine Größe von 3 bis 30 µm und am meisten bevorzugt 5 bis 8 µm aufweisen.

8. Zusammensetzung nach einem der vorhergehenden Ansprüche, **dadurch gekennzeichnet, daß** das Additiv in der Kapsel flüssig und/oder fest ist.

9. Zusammensetzung nach einem der vorhergehenden Ansprüche, **dadurch gekennzeichnet, daß** sie
a) 99 bis 40 Gew.-%, bevorzugter 80 bis 50 Gew.-% und am meisten bevorzugt 70 bis 60 Gew.-% Additiv und
b) 1 bis 60 Gew.-%, bevorzugter 20 bis 50 Gew.-% und am meisten bevorzugt 30 bis 40 Gew.-% Beschichtungsmaterial enthält.

10. Verfahren zur Herstellung einer Kautschukadditivzusammensetzung gemäß einem der vorhergehenden Ansprüche, **dadurch gekennzeichnet, daß** ein Gemisch, das mindestens ein Additiv und Beschichtungsmaterial in flüssiger gelöster, suspendierter oder emulgierter Form enthält, zu Mikrokapseln gemäß einem der vorhergehenden Ansprüche erstarrt und die erstarrten Mikrokapseln durch Aufsprühen einer niedrigschmelzenden wachsartigen Substanz in 0,1 bis 10 mm große Perlen überführt werden.

11. Verfahren nach Anspruch 10, **dadurch gekennzeichnet, daß** das Gemisch auf eine rotierende Vorrichtung dosiert wird und während der Bewegung nach außen erstarrt und Mikrokapseln bildet.

12. Verfahren nach Anspruch 10, **dadurch gekennzeichnet, daß** das Gemisch in einem wirbelbett, in einer Emulsion oder Suspension, durch Sprühtrocknung, durch Ausfällung oder durch Abkühlen und Absetzen Mikrokapseln bildet.

13. Verwendung der Kautschukadditivzusammensetzung gemäß einem der Ansprüche 1 bis 9 oder hergestellt gemäß einem der Ansprüche 10 bis 12 zur Herstellung von Kautschuk oder Kautschukmischungen, insbesondere solchen für die Gummiherstellung.

## Claims

1. Rubber additive composition comprising at least one rubber additive (a) that is encapsulated with a coating material (b) so as to form microcapsules, **characterised in that** said coating material (b) is insoluble in rubber or in rubber mixtures below temperatures of 120 °C to 140 °C, and is selected from the group consisting of waxes, paraffins, polyethylene, ethylene-vinyl acetate copolymers, polyvinyl alcohols and mixtures thereof; and said microcapsules have a size range of 1 to 75 µm, wherein the microcapsules are held together by means of a low-melting waxy substance to form 0.1 to 10 mm sized beads.

2. Composition according to Claim 1, **characterized in that** the additive (a) is selected from vulcanisation chemicals, in particular vulcanisation agents, vulcanisation accelerators and accelerator activators.

3. Composition according to Claim 1 or 2, **characterised in that** the additive (a) is sulfur, in particular crystalline sulfur.

4. Composition according to one of the preceding claims, **characterized in that** the vulcanisation accelerator is selected from the group consisting of xanthates, dithiocarbamates, tetramethylthiuram disulfide and other thiurams, thiazoles, sulfenamides, guanidines, thiourea derivatives and amine derivatives.

5. Composition according to one of the preceding claims, **characterised in that** the coating material (b) is insoluble in rubber or in rubber mixtures up to temperatures of 120 to 140 °C, in particular up to roughly 130 °C.

6. Composition according to one of the preceding claims, **characterised in that** the coating material (b) is soluble in rubber or in rubber mixtures above temperatures of 120 to 140 °C, in particular above 130 °C, or melts.

7. Composition according to one of the preceding claims, **characterised in that** the microcapsules are in the size range 1 to 75 µm, more preferably 3 to 30 µm and most preferably 5 to 8 µm.

8. Composition according to one of the preceding claims, **characterised in that** the additive in the capsule is liquid and/or solid.

9. Composition according to one of the preceding claims, **characterised in that** it comprises
a) 99 to 40 wt.%, more preferably 80 to 50 wt.% and most preferably 70 to 60 wt.% additive and
b) 1 to 60 wt.%, more preferably 20 to 50 wt.% and most preferably 30 to 40 wt.% coating material.

10. Process for the preparation of a rubber additive composition according to one of the preceding claims, **characterised in that** a mixture that comprises at least one additive and coating material in liquid, dissolved, suspended or emulsified form solidifies to form microcapsules according to one of the preceding claims, and the solidified microcapsules are converted into 0.1 to 10 mm sized beads by spraying on a low-melting waxy substance.

11. Process according to Claim 10, **characterised in that** the mixture is fed onto a rotating device and solidifies during the movement towards the exterior and forms microcapsules.

12. Process according to Claim 10, **characterised in that** the mixture forms microcapsules in a fluidised bed, in an emulsion or suspension, by spray drying, by precipitation or by cooling and sedimentation.

13. Use of the rubber additive composition according to one of Claims 1 to 9 or prepared according to one of Claims 10 to 12 for the preparation of rubber or rubber mixtures, in particular those for synthetic rubber production.

## Revendications

1. Composition d'additifs pour caoutchouc, qui comprend au moins un additif pour caoutchouc (a), où le moins un additif (a) est enveloppé d'un matériau de revêtement (b) en formant des microcapsules, **caractérisée en ce que** le matériau de revêtement (b) est insoluble dans le caoutchouc ou dans les mélanges de caoutchoucs jusqu'à des températures de 120 à 140°C et est choisi dans le groupe constitué des cires, des paraffines, du polyéthylène, des copolymères d'éthylène - acétate de vinyle, des alcools polyvinyliques et des mélanges de ceux-ci et **en ce que** les microcapsules présentent une taille de 1 à 75 µm, où les microcapsules sont maintenues en cohésion au moyen d'une substance à bas point de fusion de type cireux, en formant des perles de 0,1 à 10 mm.

2. Composition selon la revendication 1, **caractérisée en ce que** l'additif (a) est choisi parmi les réactifs de vulcanisation, en particulier les agents de vulcanisation, les accélérateurs de vulcanisation et les activateurs accélérateurs.

3. Composition selon la revendication 1 ou 2, **caractérisée en ce que** l'additif (a) est le soufre, en particulier le soufre cristallin.

4. Composition selon l'une des revendications précédentes, **caractérisée en ce que** l'accélérateur de vulcanisation est choisi dans le groupe constitué des xanthogénates, des dithiocarbamates, du disulfure de tétraméthylthiuram et d'autres thiurams, des thiazoles, des sulfènamides, des guanidines, des dérivés de thiourée et des dérivés d'amine.

5. Composition selon l'une des revendications précédentes, **caractérisée en ce que** le matériau de revêtement (b) est insoluble dans le caoutchouc ou dans les mélanges de caoutchoucs jusqu'à des températures allant de 120 à environ 130°C.

6. Composition selon l'une des revendications précédentes, **caractérisée en ce que** le matériau de revêtement (b) est soluble ou fond dans le caoutchouc ou dans les mélanges de caoutchoucs à des températures au-delà de 120 à 140°C, en particulier au-delà de 130°C.

7. Composition selon l'une des revendications précédentes, **caractérisée en ce que** les microcapsules présentent une taille allant de 3 à 30 µm et de manière encore plus préférée de 5 à 8 µm.

8. Composition selon l'une des revendications précédentes, **caractérisée en ce que** l'additif dans la capsule est liquide et/ou solide.

9. Composition selon l'une des revendications précédentes, **caractérisée en ce qu'**elle contient
a) 99 à 40 % en poids, plus préférentiellement de 80 à 50 % en poids et en particulier de 70 à 60 % en poids d'additif et
b) 1 à 60 % en poids, plus préférentiellement de 20 à 50 % en poids et en particulier de 30 à 40 % en poids de matériau de revêtement.

10. Procédé de fabrication d'une composition d'additifs pour caoutchouc selon l'une des revendications précédentes, **caractérisé en ce qu'**un mélange, qui contient au moins un additif et un matériau de revêtement sous forme liquide dissoute, suspendue ou émulsionnée, est solidifié en microcapsules selon l'une des revendications précédentes et **en ce que** les microcapsules solidifiées sont transformées en perles de 0,1 à 10 mm par pulvérisation d'une substance à bas point de fusion de type cireux.

11. Procédé selon la revendication 10, **caractérisé en ce que** le mélange est dosé sur un dispositif rotatif et se solidifie pendant son mouvement vers l'extérieur et forme des microcapsules.

12. Procédé selon la revendication 10, **caractérisé en ce que** le mélange forme des microcapsules dans un lit fluidisé, dans une émulsion ou une suspension, par lyophylisation, par précipitation ou par refroidissement et sédimentation.

13. Utilisation de la composition d'additifs pour caoutchouc selon l'une des revendications 1 à 9 ou fabriquée selon l'une des revendications 10 à 12 pour la fabrication de caoutchouc ou de mélanges de caoutchoucs, en particulier ceux destinés à la fabrication de gommes.
